# EUROPEAN PATENT SPECIFICATION

(11) **EP 4 456 505 B1**
(45) Date of publication and mention of the grant of the patent: **13.08.2025**
(21) Application number: 23170547.6
(22) Date of filing: 28.04.2023
(51) Int. Cl.: H04L 45/64, H04L 45/24, H04L 47/125

(54) **SYSTEM FOR DECOUPLING IP TRAFFIC FROM NETWORK TO NETWORK INTERFACE, NNI, UNDERLAY ROUTERS**
SYSTEM ZUR ENTKOPPLUNG VON IP-VERKEHR VON EINEM NETZWERK-ZU-NETZWERK-SCHNITTSTELLEN-, NNI-, UNTERLAGEROUTERN
SYSTÈME DE DÉCOUPLAGE DE TRAFIC IP D'UN ROUTEUR NNI SOUS-JACENT D'INTERFACE RÉSEAU À RÉSEAU

(43) Date of publication of application: 30.10.2024
(73) Proprietor: Deutsche Telekom AG, 53113 Bonn (DE)
(72) Inventor: DÜTTING, Kaspar, 70182 Stuttgart (DE); BIEDERBECK, Eric, 64625 Bensheim (DE)
(74) Representative: Vossius & Partner Patentanwälte Rechtsanwälte mbB

(56) References cited:
- WO-A1-2022/076995
- US-A1- 2016 315 808
- US-A1- 2019 268 973

## Description

### Field of the invention

This invention relates to a system for decoupling IP traffic from Network to Network Interface, NNI, underlay routers and a method thereof.

### Background

NNI (Network to Network Interface) in each country comprises of underlay routers of different carriers, which connect different carriers in different countries.

Currently, the NNI underlay routers are a bandwidth bottleneck for customers, e.g. manufacturers and operators of mobile devices such as vehicle manufacturers with OBUs (onboard units) or companies that provide their employees with laptops, tablets and cell phones for use in many countries.

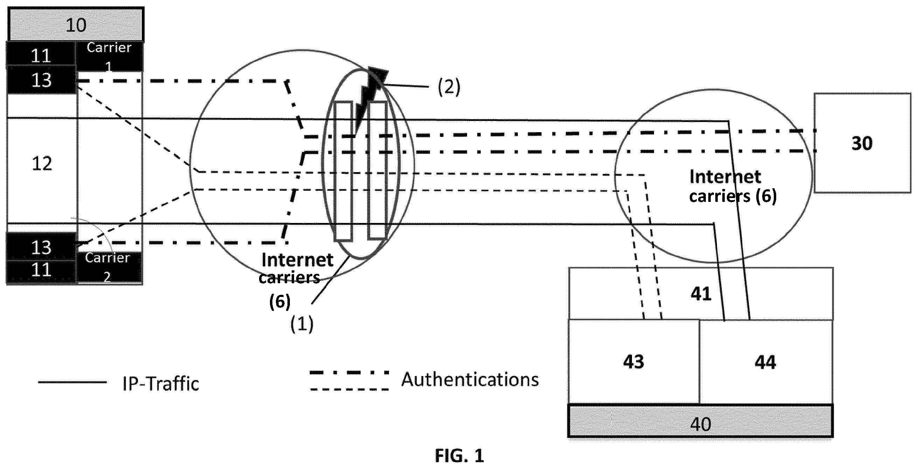

FIG. 1 illustrates an example of a standard national roaming, which allows an end device from a different home country (e.g., mobile device, OBU, etc.) to provisionally (not permanently, with the exception of machine to machine communication (m2m)) use the network in a foreign country. However, standard national roaming does not allow a foreign end device to use higher bit rates.

FIG. 1 depicts an end device 10 that comprises at least one modem 11 consisting of a Software-Defined Wide Area Network (SDWAN) underlay router 12 and a radio module. The modem 11 includes at least one Subscriber Identity Module 13 (SIM) (e.g., e-SIM and/or one dual or Multi Carrier, MC, SIM). The end device communicates with the network via one or more carriers (in FIG. 1 two carriers are depicted).

FIG. 1 depicts several lines representing the IP traffic. The continuous line depicts overlay traffic that goes from the end device 10 to a Customer SDWAN Hub 40 and, in particular, to a customer Data Center 44 (DC) of the customer SDWAN Hub 40, through a customer DC underlay access router 41.

Previous to the start of the above-mentioned overlay traffic, the end device needs to perform authentication with a minimum one of the national mobile carriers 30 (denoted by dashed lines). Once authenticated with a minimum one of the national mobile carriers 30, the end device performs authentication with a customer authentication server 43 located at the customer SDWAN Hub 40.

The SDWAN underlay routers 12 or 41 have interfaces to connect with physical connections to the Internet.

As shown in FIG. 1, the traffic outgoing from the end device goes through the NNI interconnected underlay routers 1, which allow international peering between Internet carriers 6. However, the bandwidth/capacity from the NNI is not enough for strongly international mobile minded applications.

According to the current technologies, international backbone providers are being used only for classical backbone traffic. In the state of the art, the end device does not have any kind of SDWAN overlay functionality. In other words, this means that direct routing to the Data Center is not possible. Therefore, the end device is not a mobile overlay site.

International backbone operators allow the end devices in a home country to communicate with the network using underlay traffic. However, if the end device is not in the home country, the end device needs to use the NNI underlay routers for sending and receiving data to one of the national carriers (if it is a foreign national carrier, it is the case of roaming).

US 2019/268973 A1 and WO 2022/076995 A1 are related prior art documents.

### Technical problem

In view of the above, there is problem with today's interconnections of the national network operators (carriers) via NNI interfaces in the underlay network. In particular, the problem worsens in case of unexpected traffic occurs between the different networks where a little bandwidth is available per customer (e.g., business customer) who operates many terminals for his employees and customers.

The present invention addresses the aforementioned problems by providing means for at least partially or completely bypassing the NNI underlay routers.

The present invention is based on the network connections that are customary today and combines them in a suitable manner in order to resolve the bottleneck of the network to network interface (Network to Network Interface) NNI underlay routers between network operators (carriers) in different countries.

### Summary of the invention

The above objects are achieved by the features of the independent claims.

According to an aspect of the invention, there is provided a system for completely or at least partially decoupling IP traffic from Network to Network Interface, NNI, underlay routers, the system further comprising: a mobile device having a physically or virtually installed Software-Defined Wide Area Network, SDWAN, overlay router and a modem consisting of an SDWAN underlay router and a radio module; an international backbone operator comprising a first international backbone operator underlay access router located at a first country and a second international backbone operator underlay access router located at a second country connected via an hyperscaler cloud, a Customer SDWAN Hub located in the second country including a Customer Data Center underlay access router, a Customer SDWAN Data Center overlay router, a Customer Data Center and a Customer Authentication Server, wherein the SDWAN overlay router of the mobile device is configured to completely or at least partially route traffic from the SDWAN overlay router of the mobile device through the SDWAN underlay router, the international backbone operator to the Customer SDWAN Data Center overlay router via the Customer Data Center underlay access router via a Virtual Private Network, VPN, tunnel or via Secure Vector Routing, SVR, and wherein the Customer SDWAN Data Center overlay router is configured to completely or at least partially route traffic from the Customer SDWAN Data Center overlay router through the Customer Data Center underlay access router, the international backbone operator to the SDWAN overlay router via the SDWAN underlay router of the mobile device via Virtual Private Network, VPN, tunnelling or via Secure Vector Routing, SVR.

Preferably, the system further comprises: a national mobile carrier comprising a Customer Authentication Server, a Home Location Register and a Visitor Location Register; wherein the modem includes at least one e-SIM and/or one dual or Multi Carrier, MC, SIM, coupled via the SDWAN underlay router to the SDWAN overlay router, wherein, prior to the routing of traffic from the SDWAN overlay router of the mobile device to the Customer SDWAN Data Center overlay router via VPN tunnelling or SVR, the SDWAN underlay router of the mobile device is configured to: control authentication of the mobile device in the Customer Authentication Server of the national carrier, via the NNI underlay routers; and control authentication of the mobile device in the Customer Authentication Server of the Customer SDWAN Hub, via the NNI underlay routers.

According to an aspect of the invention, there is provided a system for completely or at least partially decoupling IP traffic from the system comprising Network to Network Interface, NNI, underlay routers, the system further comprising: a mobile device having a physically or virtually installed Software-Defined Wide Area Network, SDWAN, overlay router and a modem consisting of an SDWAN underlay router and a radio module; an international backbone operator comprising a first international backbone operator underlay access router located at a first country and a second international backbone operator underlay access router located at a second country connected via an hyperscaler cloud, an international carrier that has an international carrier SDWAN Hub including an international carrier Data Center underlay access router, an international carrier SDWAN Data Center overlay router, an international carrier Data Center and an international carrier Authentication Server, wherein the SDWAN overlay router of the mobile device is configured to completely or at least partially route traffic from the SDWAN overlay router of the mobile device through the SDWAN underlay router, the international backbone operator, the international carrier Data Center underlay access router to the international carrier SDWAN Data Center overlay router via a Virtual Private Network, VPN, tunnel or via Secure Vector Routing, SVR, and wherein the international carrier SDWAN Data Center overlay router is configured to completely or at least partially route traffic from international carrier SDWAN Data Center overlay router through the international carrier Data Center underlay access router, the international backbone operator, the SDWAN underlay router of the mobile device to the SDWAN overlay router of the mobile device via Virtual Private Network, VPN, tunnelling or via Secure Vector Routing, SVR.

Preferably, the system further comprises: national mobile carrier comprising a Customer Authentication Server, a Home Location Register and a Visitor Location Register; wherein the modem includes at least one e-SIM and/or one Multi Carrier, MC, SIM, coupled via the SDWAN underlay router to the SDWAN overlay router, wherein, prior to the routing of traffic from the SDWAN overlay router of the mobile device to the international carrier SDWAN Data Center overlay router via the VPN tunnel or SSR, the SDWAN underlay router of the mobile device is configured to: control authentication of the mobile device in the Customer Authentication Server of the national carrier, via the NNI underlay routers; and control authentication of the mobile device in the international carrier Authentication Server of the international carrier SDWAN Hub, via the NNI underlay routers.

Preferably, the modem includes a Wireless Local Area Network, WLAN, modem configured to download of data such as software updates at different locations in different countries.

Preferably, the mobile device is one of: a vehicle On-Board-Unit, OBU; a laptop; a tablet; a mobile phone.

Preferably, the SDWAN overlay router and the SDWAN underlay router of the mobile device belong to a single physical or virtual device.

Preferably, the international carrier or customer is configured to use satellite networks for accessing to the network.

Preferably, the international backbone provider is configured to use satellite backbone networks.

Other aspects, features, and advantages will be apparent from the summary above, as well as from the description that follows, including the figures and the claims.

### Brief description of the drawings

In the drawings:
FIG. 1 illustrates an example of a standard national roaming according to the state of the art.
FIG. 2 illustrates an embodiment of the present invention.
FIG. 3 illustrates another embodiment of the present invention.
FIG. 4 illustrates another embodiment of the present invention.

### Detailed description of the invention

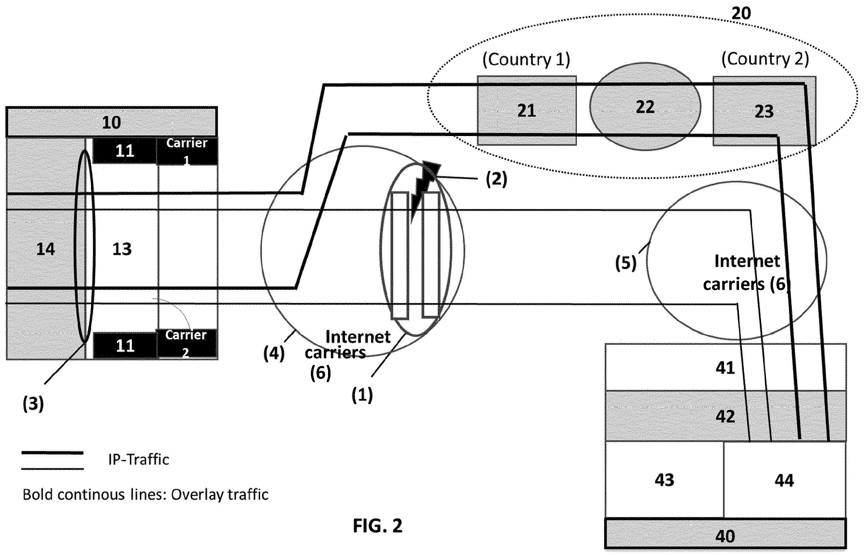

FIG. 2 illustrates an embodiment of the present invention for decoupling the entire traffic or part of the traffic of the mobile device in front of the NNI underlay routers 1.

Referring to FIG. 2, the mobile device 10 comprises a physically installed SDWAN overlay router 14 or a virtually installed SDWAN overlay router (virtual Customer Premise Equipment (vCPE) software) and a modem 11 consisting of an SDWAN underlay router 13 and a radio module.

In the system of FIG. 2, there is also shown an international backbone operator 20 which comprises at least two international backbone operator underlay access routers 21, 23 located at two different countries. The first international backbone operator underlay access router 21 and the second international backbone operator underlay access router are connected via an hyperscaler cloud 22. Between the international backbone operator 20 and the customer data center 44 there is installed a VPN client and the same is installed in the mobile device 10.

In addition, the system of FIG. 2 further comprises a Customer SDWAN Hub 40. The Customer SDWAN Hub 40 is located in the second country and comprises a Customer Data Center underlay access router 41, a Customer SDWAN Data Center overlay router 42, a Customer Data Center 44 and a Customer Authentication Server 43.

According to the invention, the entire traffic or part of the traffic is decoupled in front of the NNI and routed via SDWAN overlay router 14 and SDWAN underlay router 13 in the mobile device 10 into a cloud backbone of an internationally active backbone operator 20 who uses the backbone networks 21, 22 and 23 of the large cloud providers (hyperscalers) ("International Backbone Operator"). Thus, the traffic is split into different tunnels (over the NNI and over the International backbone Operator). Accordingly, the application bandwidth can be effectively optimized.

In an example of the invention, tunnels via hyper scalers 22 (cloud providers) are set up in addition to the tunnel via the international and national network of a national carrier. For example: a tunnel is set up from the mobile device 10 to the international backbone operator Point-of-Presence (POP) in country 1 (location 1) and to the international backbone operator POP in country 2 (location 2). In this case, the extraction of traffic then takes place at the VPN-Endpoint of the Customer SDWAN Data Center overlay router 42 of the Customer SDWAN HUB 40 in country 2 (location 2).

According to the different embodiments of the present invention, the mobile end device can be any one of the following: a vehicle, a laptop, a tablet, a mobile phone, or an On-Board-Unit (OBU).

As shown in FIG. 2, the mobile device 10 is presented with two different connections: the hyperscaler connection (through the International Backbone Operator); and the NNI underlay routers connection.

The hyperscaler connection goes from the mobile device 10 into the International Backbone Operator 20 (hyper scaler backbone) using the internet national network 5 of the local provider, over the International Backbone Operator 20 an internal hyper scaler tunnel is used to link the entry point 23 (national POP) to the destination exit point 21 (remote destination POP) of the international backbone of the hyper scaler, add the destination POP of the hyper scaler 23 a local VPN from the POP to the customer end point 42 (SDWAN overlay router of the Customer Data Center) will be established and this will be used as an "underlay service".

Additional to the underlay service (not shown in FIG. 2) an overlay tunnel will be configured, a SD-WAN Tunnel, to transport the user information of the mobile device 10. The overlay traffic is carried out via the underlay network of the international backbone provider 20 (controlled by the overlay routers).

In the embodiment of FIG. 2, the SDWAN overlay router 14 of the mobile device 10 routes (completely or at least partially) traffic from the SDWAN overlay router 14 of the mobile device 10 through the SDWAN underlay router 13, the international backbone operator 20 to the Customer SDWAN Data Center overlay router 42 via the Customer Data Center underlay access router 41 via a Virtual Private Network, VPN, tunnel or via Secure Vector Routing, SVR.

The same works in the reverse direction, namely that the Customer SDWAN Data Center overlay router 42 routes (completely or at least partially) traffic from Customer SDWAN Data Center overlay router 42 through the Customer Data Center underlay access router 41, the international backbone operator 41 to the SDWAN overlay router 14 via the SDWAN underlay router 13 of the mobile 10 device via Virtual Private Network, VPN, tunnelling or via Secure Vector Routing, SVR.

The installation of an SDWAN overlay router physically or virtually using software in addition to the underlay router with a connection to the modem/several modems 11 in the mobile device 10 enables the traffic to be distributed to more than one national underlay network or one national network operator (carrier) and, even more importantly, the possibility of having the mobile device 10 play a role as a so-called site (spoke) in the VPN (virtual private network) of the customer with reference to the Customer DC 44 of the Customer SDWAN Hub 40, which is also equipped with an SDWAN overlay router 42 in addition to the underlay router 41. The business customer thus has control over his own data center and his terminals independently of national network operators (carriers) and bottlenecks in their interconnections.

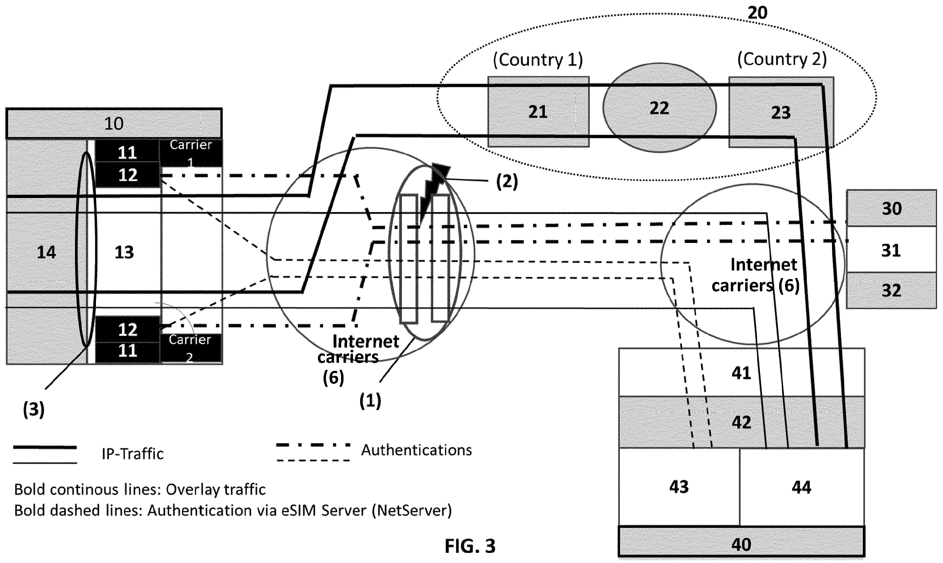

FIG. 3 illustrates another embodiment of the present invention for decoupling the entire traffic or part of the traffic of the mobile device 10 in front of the NNI underlay routers 1.

According to the embodiment of FIG. 3, the system described above in connection with FIG. 2 may additionally comprise a national mobile carrier comprising a Customer Authentication Server 30, a Home Location Register 31 and a Visitor Location Register 32.

In addition, the modem 11 of the mobile device 10 includes at least one e-SIM 12, one dual or Multi Carrier (MC) SIM 12 which is coupled via the SDWAN underlay router 13 to the SDWAN overlay router 14.

According to this embodiment, prior to the routing of traffic from the SDWAN overlay router 14 of the mobile device 10 to the Customer SDWAN Data Center overlay router 42 via VPN tunnelling or SVR (as explained above in connection with the embodiment of FIG. 2), the SDWAN underlay router 13 of the mobile device 10 is configured to control authentication of the mobile device 10.

In particular, the SDWAN underlay router 13 of the mobile device 10 controls authentication of the mobile device 10 in the Customer Authentication Server 30 of the national mobile carrier, via the NNI underlay routers 1. In addition, the SDWAN underlay router 13 of the mobile device 10 also controls authentication of the mobile device 10 in the Customer Authentication Server 43 of the Customer SDWAN Hub 40, via the NNI underlay routers 1.

The traffic is decoupled in the mobile phone platforms in the respective country via the Internet network termination point (NTP) of the mobile operators. This is because the access data (IMEI, token for encryption, SIM card number: ICCID...) of the mobile device 10 are typically stored in the NetServer (E-SIM Server) of the national mobile carrier (for authentication of the VPN service: e-SIM, MC-SIM, M2M-SIM or Standard SIM does the authentication in each country (based on the customer user account)).

In a preferred embodiment, an international backbone operator SDWAN client is installed in the network of the primary contract carrier (carrier 1), so that it can play in the customer VPN as a mobile SDWAN site, i.e. the primary contract carrier is providing the e-SIM, MC-SIM, M2M-SIM or standard SIM cards to the customer for its mobile devices.

In addition, foreign or competitors SIM cards can be provided by the primary contract carrier to the customer (carrier 2).

In the preferred embodiment, the customer of the mobile device 10 authenticates itself with the NetServer 30 (e-SIM server) of the primary contract carrier, which gives the customer permission to switch the VPN tunnel from the customer's mobile device 10 to a VPN server (not shown) of the customer's DC 44.

In this way, the NNI (Network to Network Interface) underlay routers are bypassed in whole or in part or the traffic can be distributed to overlay and underlay networks and in the underlay to several national network operators (carriers) in the country.

In addition to the tunnel via an international backbone operator, the mobile device 10 sets up a VPN tunnel via the classic Internet to the customer's DC 44. There are thus two tunnels from the mobile device 10 to the customer's DC 44 and depending on the network parameters (round trip, jitter, bandwidth), the best VPN connection or both VPN connections are used.

The SDWAN overlay router 14 built into the mobile device 10 (or virtual CPE installed as software in the mobile device) decides whether the traffic goes via the classic tunnel (i.e., through the NNI underlay routers) or the International Backbone Operator tunnel or both.

A part of the traffic can thus be routed directly in the end device (before reaching the NNI) into the overlay network (critical traffic). The national carriers in the respective country are addressed via the e-SIM, MC-SIM, M2M-SIM or standard SIM cards in the mobile device 10. Using any infrastructure given by local environments and dependencies, the overlay and underlay tunnels create a "virtual network" that spans multiple infrastructures and carriers. This applies in the case that the (business) customer SDWAN HUB is replaced by an International Carrier SDWAN Hub.

In the embodiments of the invention, either one, two or more e-SIMs 12 (Net-SIMs) or one MC (Multi Carrier) SIM 12 can be used in the mobile device 10. With MC-SIM 12, the modem 11 and, if necessary, an antenna must be available in the same way as the number of national operators (carriers).

In the embodiments of the invention, the e-SIM 12 (Net-SIM) can be replaced by a normal SIM and also be designed as an M2M-SIM (similar to SIM, but different tariff).

According to the present invention, critical vehicle/laptop/tablet/cell phone communications as well as entertainment communications can be routed via the SDWAN overlay router 14 of the mobile device 10.

According to various embodiments of the present invention, IP traffic from the mobile device 10 (or vehicle OBU, laptop, tablet) may be routed from the SDWAN overlay router (Ethernet interface) via underlay router and eSIM modem 11 to the mobile carrier Internet, from there to the International Backbone Operator underlay router 21, from there to the hyper scaler 22 (backbone network large cloud operator), from there into International Backbone Operator underlay router 23, from there into the local carrier Internet, and from there into the Customer Data Center underlay access router 41, and via the Customer SDWAN Data Center overlay router 42 into the customer Data Center 44.

Usually only the NNI transition between the international networks is critical. When the mobile device 10 is in the home country the connections are less critical because more network resources are available.

According to various embodiments of the present invention, the uploading of the VPN client of the international backbone operator to the mobile device 10 in combination with the authentication by the SIM card and with the SDWAN underlay router, enables the complete and fully automatic authentication of the mobile device 10 as well as the use of the mobile device 10 in the VPN of the business customer as "mobile SDWAN site".

The SIM card can be designed as a standard hardware SIM, M2M SIM, Multi Carrier (MC) SIM or e-SIM (NetSIM), where the data is kept on a server instead of on the card. An advantage of the present invention is that business customers are no longer limited by national carrier agreements when setting up their virtual private network.

Another advantage of the invention is that the business customer does not have to make as much direct contact with national operators (carriers) when operating its virtual private network when it comes to bandwidth expansions for its mobile devices (vehicle fleet, employee cell phones/laptops/tablets).

Another advantage of the present invention is that the business customer can form segments and groups of terminals as mobile sites with the integration of his mobile terminals into the SDWAN overlay network, which can be equipped with specific software for certain continents or countries, for example, without a rigid 1:1 to connect to a SIM card. Segmentations and groupings can be changed independently of SIM cards and underlay networks.

The overlay and underlay routers can also be designed as a single physical device or a single virtual software in the mobile device 10.

The mobile device modem 11 with SIM or eSIM card may also be replaced or supplemented by a WLAN modem 11 in order to download large amounts of data (e.g., software updates) at different locations in different countries.

In addition, the present invention can also be used using SVR (Secure Vector Routing) technology instead of VPN technology. In this regard, using SVR technology has some benefits for the customer by using the non-IPsec technologies on the overlay tunnel. For example, the protocol overhead will be reduced and the failover switching time between connections line will also be reduced. Furthermore, the requirements for the processor and hardware is reduced and this brings a benefit on reduced energy and costs.

The present invention may also be used for business customers or organizations or international carriers to set up virtual private networks incorporating satellite networks.

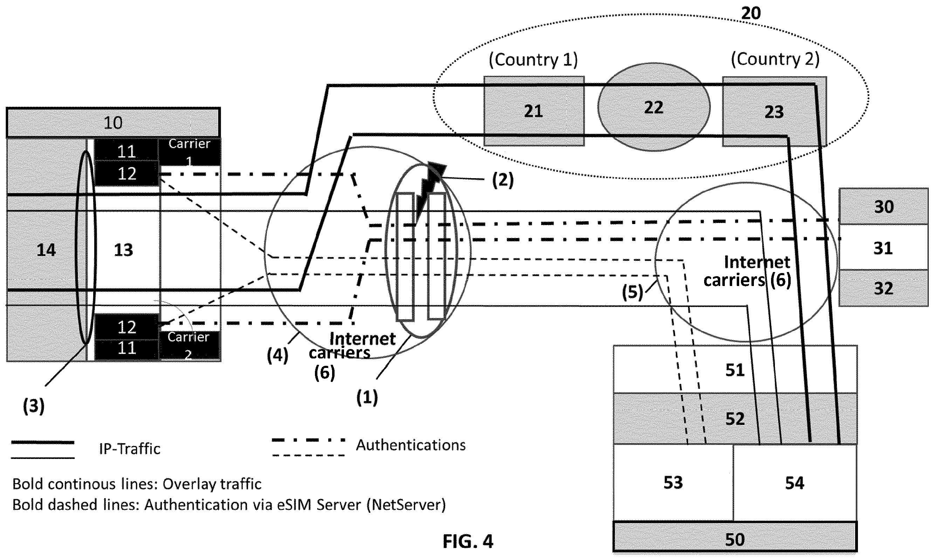

FIG. 4 illustrates another embodiment of the present invention. This figure differs from FIG. 3 in that the Customer SDWAN Hub 40 is exchanged for an international carrier that has an international carrier SDWAN Hub 50 including an international carrier Data Center underlay access router 51, an international carrier SDWAN Data Center overlay router 52, an international carrier Data Center 54 and an international carrier Authentication Server 53.

Thus, the embodiment shown by FIG. 4 works similar as the embodiment described with reference to FIG. 3, and thus the descriptions therein are omitted.

Thus, the present invention can be used by global network operators (global carriers) who want to offer international telecommunications services and terminals to their customers in the sense of multi-provider management (MPM) or network operators.

The global carrier therefore may offer its customers end devices with SDWAN overlay routers that function worldwide according to the same principle as business customers offer to their customers end devices or vehicles with onboard units as illustrated by FIG. 4.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A system for completely or at least partially decoupling IP traffic from Network to Network Interface, NNI, underlay routers (1), the system further comprising:
a mobile device (10) having a physically or virtually installed Software-Defined Wide Area Network, SDWAN, overlay router (14) and a modem (11) consisting of an SDWAN underlay router (13) and a radio module;
an international backbone operator (20) comprising a first international backbone operator underlay access router (21) located at a first country and a second international backbone operator underlay access router (23) located at a second country connected via an hyperscaler cloud (22),
a Customer SDWAN Hub (40) located in the second country including a Customer Data Center underlay access router (41), a Customer SDWAN Data Center overlay router (42), a Customer Data Center (44) and a Customer Authentication Server (43),
wherein the SDWAN overlay router (14) of the mobile device (10) is configured to completely or at least partially route traffic from the SDWAN overlay router (14) of the mobile device (10) through the SDWAN underlay router (13), the international backbone operator (20) to the Customer SDWAN Data Center overlay router (42) via the Customer Data Center underlay access router (41) via a Virtual Private Network, VPN, tunnel or via Secure Vector Routing, SVR, and
wherein the Customer SDWAN Data Center overlay router (42) is configured to completely or at least partially route traffic from the Customer SDWAN Data Center overlay router (42) through the Customer Data Center underlay access router (41), the international backbone operator (41) to the SDWAN overlay router (14) via the SDWAN underlay router (13) of the mobile (10) device via Virtual Private Network, VPN, tunnelling or via Secure Vector Routing, SVR.

2. The system of claim 1, the system further comprising:
a national mobile carrier comprising a Customer Authentication Server (30), a Home Location Register (31) and a Visitor Location Register (32);
wherein the modem (11) includes at least one e-SIM (12) and/or one dual or Multi Carrier, MC, SIM (12), coupled via the SDWAN underlay router (13) to the SDWAN overlay router (14),
wherein, prior to the routing of traffic from the SDWAN overlay router (14) of the mobile device (10) to the Customer SDWAN Data Center overlay router (42) via VPN tunnelling or SVR, the SDWAN underlay router (13) of the mobile device (10) is configured to:
control authentication of the mobile device (10) in the Customer Authentication Server (30) of the national carrier, via the NNI underlay routers (1); and
control authentication of the mobile device (10) in the Customer Authentication Server (43) of the Customer SDWAN Hub (40), via the NNI underlay routers (1).

3. A system for completely or at least partially decoupling IP traffic from the system comprising Network to Network Interface, NNI, underlay routers (1), the system further comprising:
a mobile device (10) having a physically or virtually installed Software-Defined Wide Area Network, SDWAN, overlay router (14) and a modem (11) consisting of an SDWAN underlay router (13) and a radio module;
an international backbone operator (20) comprising a first international backbone operator underlay access router (21) located at a first country and a second international backbone operator underlay access router (23) located at a second country connected via an hyperscaler cloud (22),
an international carrier that has an international carrier SDWAN Hub (50) including an international carrier Data Center underlay access router (51), an international carrier SDWAN Data Center overlay router (52), an international carrier Data Center (54) and an international carrier Authentication Server (53),
wherein the SDWAN overlay router (14) of the mobile device (10) is configured to completely or at least partially route traffic from the SDWAN overlay router (14) of the mobile device (10) through the SDWAN underlay router (13), the international backbone operator (20), the international carrier Data Center underlay access router (51) to the international carrier SDWAN Data Center overlay router (52) via a Virtual Private Network, VPN, tunnel or via Secure Vector Routing, SVR, and
wherein the international carrier SDWAN Data Center overlay router (52) is configured to completely or at least partially route traffic from international carrier SDWAN Data Center overlay router (52) through the international carrier Data Center underlay access router (51), the international backbone operator (20), the SDWAN underlay router (13) of the mobile device (10) to the SDWAN overlay router (14) of the mobile device (10) via Virtual Private Network, VPN, tunnelling or via Secure Vector Routing, SVR.

4. The system of claim 3, the system further comprising:
a national mobile carrier comprising a Customer Authentication Server (30), a Home Location Register (31) and a Visitor Location Register (32);
wherein the modem (11) includes at least one e-SIM (12) and/or one Multi Carrier, MC, SIM (12), coupled via the SDWAN underlay router (13) to the SDWAN overlay router (14),
wherein, prior to the routing of traffic from the SDWAN overlay router (14) of the mobile device (10) to the international carrier SDWAN Data Center overlay router (52) via the VPN tunnel or SVR, the SDWAN underlay router of the mobile device is configured to:
control authentication of the mobile device (10) in the Customer Authentication Server (30) of the national carrier, via the NNI underlay routers (1); and
control authentication of the mobile device (10) in the international carrier Authentication Server (53) of the international carrier SDWAN Hub (50), via the NNI underlay routers (1).

5. The system of any of the preceding claims, wherein the modem (11) includes a Wireless Local Area Network, WLAN, modem configured to download of data such as software updates at different locations in different countries.

6. The system of any of the preceding claims, wherein the mobile device (10) is one of: a vehicle On-Board-Unit, OBU; a laptop; a tablet; a mobile phone.

7. The system of any of the preceding claims, wherein the SDWAN overlay router (14) and the SDWAN underlay router (13) of the mobile device (10) belong to a single physical or virtual device.

8. The system of claim 7, wherein the international carrier or customer is configured to use satellite networks for accessing to the network; and/or
the international backbone provider is configured to use satellite backbone networks.

## Patentansprüche

1. System zum vollständigen oder zumindest teilweisen Entkoppeln des IP-Datenverkehrs von Netzwerk-zu-Netzwerk-Schnittstellen-, NNI-, Underlay-Routern (1), wobei das System ferner aufweist:
ein Mobilgerät (10) mit einem physisch oder virtuell installierten Software-Defined Wide Area Network-, SDWAN-,Overlay-Router (14) und einem Modem (11), das aus einem SDWAN-Underlay-Router (13) und einem Funkmodul besteht;
einen internationalen Backbone-Betreiber (20), der einen ersten Underlay-Zugangsrouter (21) des internationalen Backbone-Betreibers, der sich in einem ersten Land befindet, und einen zweiten Underlay-Zugangsrouter (23) des internationalen Backbone-Betreibers, der sich in einem zweiten Land befindet, aufweist, die über eine Hyperscaler-Cloud (22) verbunden sind,
einen Kunden-SDWAN-Hub (40), der sich in dem zweiten Land befindet und einen Underlay-Zugangsrouter (41) des Kunden-Datenzentrums, einen SDWAN-Overlay-Router (42) des Kunden-Datenzentrums, ein Kunden-Datenzentrum (44) und einen Kunden-Authentifizierungsserver (43) aufweist,
wobei der SDWAN-Overlay-Router (14) des Mobilgeräts (10) konfiguriert ist, den Datenverkehr vollständig oder zumindest teilweise vom SDWAN-Overlay-Router (14) des Mobilgeräts (10) über den SDWAN-Underlay-Router (13), den internationalen Backbone-Betreiber (20) zum SDWAN-Overlay-Router (42) des Kunden-Datenzentrums über den Underlay-Zugangsrouter (41) des Kunden-Datenzentrums über einen Virtual Private Network-, VPN-,Tunnel oder über Secure Vector Routing, SVR, weiterzuleiten, und
wobei der SDWAN-Overlay-Router (42) des Kunden-Datenzentrums konfiguriert ist, den Datenverkehr vom SDWAN-Overlay-Router (42) des Kunden-Datenzentrums vollständig oder zumindest teilweise über den Underlay-Zugangsrouter (41) des Kunden-Datenzentrums, den internationalen Backbone-Betreiber (41) zum SDWAN-Overlay-Router (14) über den SDWAN-Underlay-Router (13) des Mobilgeräts (10) über einen Virtual Private Network-, VPN-,Tunnel oder über Secure Vector Routing, SVR, weiterzuleiten.

2. System nach Anspruch 1, wobei das System weiterhin aufweist:
einen nationalen Mobilfunkanbieter, der einen Kundenauthentifizierungsserver (30), ein Heimatstandortregister (31) und ein Besucherstandortregister (32) aufweist;
wobei das Modem (11) mindestens eine e-SIM (12) und/oder eine Dual- oder Multi Carrier-, MC-,SIM (12) enthält, die über den SDWAN-Underlay-Router (13) mit dem SDWAN-Overlay-Router (14) verbunden ist,
wobei der SDWAN-Underlay-Router (13) des Mobilgeräts (10) vor der Weiterleitung des Datenverkehrs vom SDWAN-Overlay-Router (14) des Mobilgeräts (10) zum SDWAN-Overlay-Router (42) des Kunden-Datenzentrums über VPN-Tunneling oder SVR konfiguriert ist:
die Authentifizierung des Mobilgeräts (10) im Kundenauthentifizierungsserver (30) des nationalen Netzbetreibers über die NNI-Underlay-Router (1) zu steuern; und
die Authentifizierung des Mobilgeräts (10) im Kunden-Authentifizierungsserver (43) des Kunden-SDWAN-Hubs (40) über die NNI-Underlay-Router (1) zu steuern.

3. System zum vollständigen oder zumindest teilweisen Entkoppeln des IP-Datenverkehrs von dem System, das die Netzwerk-zu-Netzwerk-Schnittstellen-, NNI-, Underlay-Router (1) aufweist, wobei das System weiterhin aufweist:
ein Mobilgerät (10) mit einem physisch oder virtuell installierten Software-Defined Wide Area Network-, SDWAN-,Overlay-Router (14) und einem Modem (11), das aus einem SDWAN Underlay-Router (13) und einem Funkmodul besteht;
einen internationalen Backbone-Betreiber (20), der einen ersten Underlay-Zugangsrouter (21) des internationalen Backbone-Betreibers, der sich in einem ersten Land befindet, und einen zweiten Underlay-Zugangsrouter (23) des internationalen Backbone-Betreibers, der sich in einem zweiten Land befindet, aufweist, die über eine Hyperscaler-Cloud (22) verbunden sind,
einem internationalen Netzbetreiber, der über einen SDWAN-Hub (50) des internationalen Netzbetreibers verfügt, der einen Underlay-Zugangsrouter (51) des Datenzentrums des internationalen Netzbetreibers, einen SDWAN-Overlay-Router (52) des Datenzentrums des internationalen Netzbetreibers, ein Datenzentrum (54) des internationalen Netzbetreibers und einen Authentifizierungsserver (53) des internationalen Netzbetreibers aufweist,
wobei der SDWAN-Overlay-Router (14) des Mobilgeräts (10) konfiguriert ist, den Datenverkehr vollständig oder zumindest teilweise vom SDWAN-Overlay-Router (14) des Mobilgeräts (10) über den SDWAN-Underlay-Router (13), den internationalen Backbone-Betreiber (20), den Underlay-Zugangsrouter (51) des internationalen Netzbetreibers zum SDWAN-Overlay-Router (52) des Datenzentrums des internationalen Netzbetreibers über einen Virtual Private Network, VPN-,Tunnel oder über Secure Vector Routing, SVR, weiterzuleiten, und
wobei der SDWAN-Overlay-Router (52) des Datenzentrums des internationalen Netzbetreibers konfiguriert ist, den Datenverkehr vom SDWAN-Overlay-Router (52) des Datenzentrums des internationalen Netzbetreibers vollständig oder zumindest teilweise über den Underlay-Zugangsrouter (51) des Datenzentrums des internationalen Netzbetreibers, den internationalen Backbone-Betreiber (20), den SDWAN-Underlay-Router (13) des Mobilgeräts (10) zum SDWAN-Overlay-Router (14) des Mobilgeräts (10) über einen Virtual Private Network-, VPN-,Tunnel oder über Secure Vector Routing, SVR, weiterzuleiten.

4. System nach Anspruch 3, wobei das System weiterhin aufweist:
einen nationalen Mobilfunkanbieter, der einen Kundenauthentifizierungsserver (30), ein Heimatstandortregister (31) und ein Besucherstandortregister (32) aufweist;
wobei das Modem (11) mindestens eine e-SIM (12) und/oder eine Multi Carrier, MC, SIM (12) enthält, die über den SDWAN-Underlay-Router (13) mit dem SDWAN-Overlay-Router (14) verbunden ist,
wobei der SDWAN-Underlay-Router des Mobilgeräts vor dem Weiterleiten des Datenverkehrs vom SDWAN-Overlay-Router (14) des Mobilgeräts (10) zum SDWAN-Overlay-Router (52) des Datenzentrums des internationalen Netzbetreibers über den VPN-Tunnel oder SVR konfiguriert ist:
die Authentifizierung des Mobilgeräts (10) im Kundenauthentifizierungsserver (30) des nationalen Betreibers über die NNI-Underlay-Router (1) zu steuern; und
die Authentifizierung des Mobilgeräts (10) im Authentifizierungsserver (53) des SDWAN-Hubs (50) des internationalen Netzbetreibers über die NNI-Underlay-Router (1) zu steuern.

5. System nach einem der vorhergehenden Ansprüche, wobei das Modem (11) ein Wireless Local Area Network- ,WLAN-,Modem aufweist, das konfiguriert ist, Daten wie Software-Updates an verschiedenen Orten in verschiedenen Ländern herunterzuladen.

6. System nach einem der vorhergehenden Ansprüche, wobei das Mobilgerät (10) eines ist von: einer On-Board-Unit (OBU) des Fahrzeugs; einem Laptop; einem Tablet; einem Mobiltelefon.

7. System nach einem der vorhergehenden Ansprüche, wobei der SDWAN-Overlay-Router (14) und der SDWAN-Underlay-Router (13) des Mobilgeräts (10) zu einem einzigen physischen oder virtuellen Gerät gehören.

8. System nach Anspruch 7, wobei der internationale Netzbetreiber oder Kunde konfiguriert ist, Satellitennetzwerke für den Zugang zum Netzwerk zu verwenden; und/oder der internationale Backbone-Betreiber konfiguriert ist, Satelliten-Backbone-Netzwerke zu verwenden.

## Revendications

1. Système destiné à découpler complètement ou au moins partiellement un trafic IP depuis des routeurs underlay d'une interface réseau-réseau, NNI, (1) le système comprenant en outre :
un dispositif mobile (10) ayant un routeur overlay d'un réseau étendu défini par logiciel, SDWAN, (14), installé virtuellement ou physiquement, et un modem (11) constitué d'un routeur underlay SDWAN (13) et d'un module radio ;
un opérateur de backbone international (20) comprenant un premier routeur d'accès underlay d'opérateur de backbone international (21) situé au niveau d'un premier pays et un second routeur d'accès underlay d'opérateur de backbone international (23) situé au niveau d'un second pays connectés via un cloud hyperscaler (22),
un hub SDWAN client (40) situé dans le second pays incluant un routeur d'accès underlay de centre de données client (41), un routeur overlay de centre de données SDWAN client (42), un centre de données client (44) et un serveur d'authentification client (43),
dans lequel le routeur overlay SDWAN (14) du dispositif mobile (10) est configuré pour acheminer complètement ou partiellement un trafic depuis le routeur overlay SDWAN (14) du dispositif mobile (10) par le routeur underlay SDWAN (13), l'opérateur de backbone international (20) jusqu'au routeur overlay de centre de données SDWAN client (42) via le routeur d'accès underlay de centre de données client (41) via un tunnel de réseau privé virtuel, VPN, ou via un routage à vecteur de distances, SVR, et
dans lequel le routeur overlay de centre de données SDWAN client (42) est configuré pour acheminer complètement ou au moins partiellement un trafic depuis le routeur overlay de centre de données SDWAN client (42) par le routeur d'accès underlay de centre de données client (41), l'opérateur de backbone international (41) jusqu'au routeur overlay SDWAN (14) via le routeur underlay SDWAN (13) du dispositif mobile (10) via une tunnellisation de réseau privé virtuel, VPN, ou via un routage à vecteur de distances, SVR.

2. Système selon la revendication 1, le système comprenant en outre :
un opérateur mobile national comprenant un serveur d'authentification client (30), un Home Location Register (31) et un Visitor Location Register (32) ;
dans lequel le modem (11) inclut au moins une e-SIM (12) et/ou une dual-SIM ou multi-opérateurs, MC, (12), couplées via le routeur underlay SDWAN (13) au routeur overlay SDWAN (14),
dans lequel, avant le routage du trafic depuis le routeur overlay SDWAN (14) du dispositif mobile (10) jusqu'au routeur overlay de centre de données SDWAN client (42) via tunnellisation VPN ou via SVR, le routeur underlay SDWAN (13) du dispositif mobile (10) est configuré pour :
contrôler une authentification du dispositif mobile (10) dans le serveur d'authentification client (30) de l'opérateur national, via les routeurs underlay NNI (1) ; et
contrôler une authentification du dispositif mobile (10) dans le serveur d'authentification client (43) du hub SDWAN client (40), via les routeurs underlay NNI (1).

3. Système destiné à découpler complètement ou au moins partiellement un trafic IP depuis le système comprenant des routeurs underlay d'une interface réseau-réseau, NNI, (1) le système comprenant en outre :
un dispositif mobile (10) ayant un routeur overlay d'un réseau étendu défini par logiciel, SDWAN, (14), installé virtuellement ou physiquement, et un modem (11) constitué d'un routeur underlay SDWAN (13) et d'un module radio ;
un opérateur de backbone international (20) comprenant un premier routeur d'accès underlay d'opérateur de backbone international (21) situé au niveau d'un premier pays et un second routeur d'accès underlay d'opérateur de backbone international (23) situé au niveau d'un second pays connectés via un cloud hyperscaler (22),
un opérateur international qui a un hub SDWAN d'opérateur international (50) incluant un routeur d'accès underlay de centre de données d'opérateur international (51), un routeur overlay de centre de données SDWAN d'opérateur international (52), un centre de données d'opérateur international (54) et un serveur d'authentification d'opérateur international (53),
dans lequel le routeur overlay SDWAN (14) du dispositif mobile (10) est configuré pour acheminer complètement ou au moins partiellement un trafic depuis le routeur overlay SDWAN (14) du dispositif mobile (10) par le routeur underlay SDWAN (13), l'opérateur de backbone international (20), le routeur d'accès underlay de centre de données d'opérateur international (51) jusqu'au routeur overlay de centre de données SDWAN d'opérateur international (52) via un tunnel de réseau privé virtuel, VPN, ou via un routage de vecteur de distances, SVR, et
dans lequel le routeur overlay de centre de données SDWAN d'opérateur international (52) est configuré pour acheminer complètement ou au moins partiellement un trafic depuis le routeur overlay de centre de données SDWAN d'opérateur international (52) par le routeur d'accès underlay de centre de données d'opérateur international (51), l'opérateur de backbone international (20), le routeur underlay SDWAN (13) du dispositif mobile (10) jusqu'au routeur overlay SDWAN (14) du dispositif mobile (10) via une tunnellisation de réseau privé virtuel, VPN, ou via un routage à vecteur de distances, SVR.

4. Système selon la revendication 3, le système comprenant en outre :
un opérateur mobile national comprenant un serveur d'authentification client (30), un Home Location Register (31) et un Visitor Location Register (32) ;
dans lequel le modem (11) inclut au moins une e-SIM (12) et/ou une SIM multi-opérateurs, MC, (12), couplées via le routeur underlay SDWAN (13) au routeur overlay SDWAN (14),
dans lequel, avant le routage de trafic depuis le routeur overlay SDWAN (14) du dispositif mobile (10) jusqu'au routeur overlay de centre de données SDWAN d'opérateur international (52) via le tunnel VPN ou via SVR, le routeur underlay SDWAN du dispositif mobile est configuré pour :
contrôler une authentification du dispositif mobile (10) dans le serveur d'authentification client (30) de l'opérateur national, via les routeurs underlay NNI (1) ; et
contrôler une authentification du dispositif mobile (10) dans le serveur d'authentification de l'opérateur international (53) du hub SDWAN d'opérateur international (50), via les routeurs underlay NNI (1).

5. Système selon l'une quelconque des revendications précédentes, dans lequel le modem (11) inclut un modem de réseau local sans fil, WLAN, configuré pour télécharger des données telles que des mises à jour logicielles à différents endroits dans différents pays.

6. Système selon l'une quelconque des revendications précédentes, dans lequel le dispositif mobile (10) est un élément parmi : un véhicule à unité embarquée, OBU ; un ordinateur portable ; une tablette ; un téléphone mobile.

7. Système selon l'une quelconque des revendications précédentes, dans lequel le routeur overlay SDWAN (14) et le routeur underlay SDWAN (13) du dispositif mobile (10) appartiennent à un dispositif physique ou virtuel unique.

8. Système selon la revendication 7, dans lequel le client ou opérateur international est configuré pour utiliser des réseaux par satellite pour accéder au réseau ; et/ou
le fournisseur de backbone international est configuré pour utiliser des réseaux de backbone par satellite.
